# EUROPÄISCHE PATENTANMELDUNG

(11) **EP 4 697 105 A1**
(43) Veröffentlichungstag der Anmeldung: **18.02.2026**
(21) Anmeldenummer: 24194113.7
(22) Anmeldetag: 12.08.2024
(51) Int. Cl.: G05B 19/042, G05B 19/418

(54) **ÜBERWACHUNG EINER ANLAGE DER GRUNDSTOFFINDUSTRIE**

(71) Anmelder: Primetals Technologies Germany GmbH, 91058 Erlangen (DE)
(72) Erfinder: Setter, Jens, 91056 Erlangen (DE)
(74) Vertreter: Metals@Linz

(57) **Zusammenfassung**

Im Rahmen eines Kernverfahrens wird zur Überwachung einer Anlage der Grundstoffindustrie, insbesondere der Metallindustrie, im laufenden Betrieb der Anlage ein nicht spurgebundener, motorisch angetriebener, unbemannter Sensorträger (5) in die Nähe von Aggregaten (1, 3) der Anlage der Grundstoffindustrie bewegt. Mittels an dem Sensorträger (5) angeordneter Sensoreinrichtungen (7) werden Sensordaten (D) aus der momentanen Umgebung des Sensorträgers (5) erfasst, während der Sensorträger (5) sich im Bereich der Anlage befindet. Die erfassten Sensordaten (D) werden in einer an dem Sensorträger (5) angeordneten Speichereinrichtung gespeichert und/oder leitungslos an eine außerhalb des Sensorträgers (5) angeordnete externe Einrichtung (11) übermittelt. Der Sensorträger (5) wird nach dem Erfassen der Sensordaten (D) wieder von den Aggregaten (1, 3) der Anlage der Grundstoffindustrie entfernt.

## Beschreibung

### Gebiet der Technik

Die vorliegende Erfindung betrifft die Überwachung einer Anlage der Grundstoffindustrie, insbesondere der Metallindustrie.

### Zusammenfassung der Erfindung

Anlagen der Grundstoffindustrie sind in den verschiedensten Ausgestaltungen bekannt. Speziell im Bereich der Metallindustrie kann die Anlage beispielsweise als Hochofen, als Lichtbogenofen, als Konverter, als Stranggießanlage, als Walzwerk, insbesondere als eingerüstiges Reversierwalzwerk oder mehrgerüstige Walzstraße (beide zum Warm- oder Kaltwalzen), als Beizlinie, als Glühe oder als Wiedererwärmungsofen ausgebildet sein. Diese Auflistung erhebt keinen Anspruch auf Vollständigkeit.

Unabhängig vom konkreten Typus der Anlage sind derartige Anlagen stets weitläufig und komplex. Um derartige Anlagen herum ist weiterhin regelmäßig ein relativ großer Sicherheitsbereich eingerichtet, der von Personen nur dann betreten werden kann und darf, wenn die Anlage stillsteht und auch die Energieversorgung der Anlage abgeschaltet ist, so dass die Anlage nicht versehentlich in Betrieb genommen werden kann, solange sich Personen im Sicherheitsbereich befinden. Derartige Anlagen müssen aber dennoch immer wieder auf Schäden, Mängel, Wartungsbedarf usw. überprüft werden. In der Praxis werden derartige Anlagen daher oftmals einmal am Tag oder sogar mehrmals am Tag für eine bestimmte Zeit stillgesetzt. Nur während dieser Zeiten ist eine Überprüfung der Anlage möglich.

Diese Vorgehensweise weist mehrere wesentliche Nachteile auf. Zum einen ist eine Überprüfung der Anlage ausschließlich während dieser Zeiten möglich. Während der übrigen Zeiten, während derer die Anlage betrieben wird, ist eine Überprüfung der Anlage nicht möglich. Zum anderen befindet sich die Anlage während des jeweiligen Überprüfungszeitraums im Stillstand. Sie liefert während des jeweiligen Überprüfungszeitraums also kein Produktionsergebnis. Schließlich benötigt die Überprüfung oftmals geraume Zeit. Entsprechend groß ist der Verlust an Produktivität.

Die Aufgabe der vorliegenden Erfindung besteht darin, Möglichkeiten zu schaffen, mittels derer die Nachteile des Standes der Technik behoben werden.

Die Aufgabe wird durch ein Überwachungsverfahren mit den Merkmalen des Anspruchs 1 gelöst. Vorteilhafte Ausgestaltungen des Überwachungsverfahrens sind Gegenstand der abhängigen Ansprüche 2 bis 12.

Erfindungsgemäß wird ein Überwachungsverfahren für eine Anlage der Grundstoffindustrie, insbesondere der Metallindustrie, geschaffen, wobei im Rahmen eines Kernverfahrens im laufenden Betrieb der Anlage
- ein nicht spurgebundener, motorisch angetriebener, unbemannter Sensorträger in die Nähe von Aggregaten der Anlage der Grundstoffindustrie bewegt wird,
- mittels an dem Sensorträger angeordneter Sensoreinrichtungen Sensordaten aus der momentanen Umgebung des Sensorträgers erfasst werden, während der Sensorträger sich im Bereich der Anlage befindet,
- die erfassten Sensordaten in einer an dem Sensorträger angeordneten Speichereinrichtung gespeichert werden und/oder leitungslos an eine außerhalb des Sensorträgers angeordnete externe Einrichtung übermittelt werden und
- der Sensorträger nach dem Erfassen der Sensordaten wieder von den Aggregaten der Anlage der Grundstoffindustrie entfernt wird.

Die Ausführung im laufenden Betrieb wird möglich, weil der unbemannte Sensorträger verwendet wird. Es besteht daher nicht die Gefahr von Personenschäden. Dadurch, dass das Kernverfahren im laufenden Betrieb der Anlage ausgeführt wird (und auch ausgeführt werden kann), ist es für die Überwachung der Anlage nicht erforderlich, die Anlage für den Zeitraum der Ausführung des Kernverfahrens in den Stillstand zu versetzen. Die Produktivitätsverluste des Standes der Technik können somit vermieden werden.

Durch die Möglichkeit, das Kernverfahren im laufenden Betrieb der Anlage auszuführen, ist es weiterhin möglich, das Kernverfahren auch während einer normalen Produktion immer wieder auszuführen, so dass der zeitliche Abstand zwischen aufeinanderfolgenden Ausführungen des Kernverfahrens gegenüber Inspektionen durch Personen verkürzt werden kann. Es kann also - beispielsweise - das Kernverfahren jede Stunde einmal ausgeführt werden und nicht nur, wie im Stand der Technik, einmal oder zweimal am Tag eine Inspektion erfolgen. Dies ist unkritisch, weil die Anlage während der jeweiligen Ausführung des Kernverfahrens weiter produzieren kann und dennoch keine Gefahr von nennenswerten Schäden besteht.

Die Aggregate der Anlage im Sinne der vorliegenden Erfindung sind zumindest die eigentlichen Nutzaggregate, welche im Sinne der Einwirkung auf ein Eingangsmaterial und zur Erzeugung eines Ausgangsmaterials direkt in die Produktion eingebunden sind, also beispielsweise bei einem Walzwerk deren Walzgerüste. Die Aggregate der Anlage können aber auch Hilfsaggregate mit umfassen, beispielsweise Antriebe der Nutzaggregate, eine Schaltanlage zur Energieversorgung der Nutzaggregate oder einen Transformatorraum.

Die externe Einrichtung, an welche die Sensordaten gegebenenfalls übermittelt werden, kann beispielsweise eine Auswertungseinrichtung sein, welche die erfassten Sensordaten automatisiert aufbereitet und auswertet. Alternativ oder zusätzlich kann es sich um eine Mensch-Maschine-Schnittstelle handeln. Im letztgenannten Fall ist beispielsweise die Wiedergabe als Livebild oder auch als temporär oder permanent aufgezeichnetes Bild möglich.

Es ist möglich, dass der Sensorträger sich auf dem Boden bewegt. In diesem Fall kann der Sensorträger beispielsweise "hundeartig" ausgebildet sein, also vier "Beine" ähnlich wie ein Hund aufweisen, oder "spinnenartig" ausgebildet sein, also acht "Beine" ähnlich wie eine Spinne aufweisen. Entsprechende Roboter sind bekannt. Beispielsweise wird ein vierbeiniger Roboter von der Schweizer Firma ANYbotics vertrieben, ein achtbeiniger Roboter von der Firma Variobot in Leopoldshafen, Deutschland. In beiden Fällen kann der Sensorträger auf seinen "Beinen" durch die Anlage "laufen" und dabei auch Hindernisse überwinden oder Stufen hinauf und hinab steigen. Im Falle der Bewegung des Sensorträgers auf dem Boden kann der Sensorträger alternativ zu Beinen Räder und/oder Raupenketten aufweisen und durch die Anlage fahren. Auch hier sind entsprechende Roboter allgemein bekannt. Rein beispielhaft kann der Magirus Wolf R1 genannt werden. Die Anordnung von Sensoreinrichtungen an derartigen, sich auf dem Boden bewegenden Robotern ist ohne weiteres möglich.

Alternativ ist es möglich, dass der Sensorträger sich in der Luft bewegt. In diesem Fall kann der Sensorträger nach Art eines Modellflugzeugs (Flugzeug im Sinne eines Fluggeräts mit Tragflächen, das für den Verbleib in der Luft eine gewisse Mindestgeschwindigkeit einhalten muss) oder nach Art eines Helikopters oder eines Quadcopters oder dergleichen ausgebildet sein und durch die Anlage fliegen. Je nach Art des Fluggeräts kann der Sensorträger auch an einem bestimmten Ort schweben und/oder seitwärts fliegen. Beispielsweise ist ein sehr kleiner Sensorträger (größte Abmessung unter 20 cm) unter der Bezeichnung PD 100 Black Hornet bekannt. Dieser Sensorträger ist hubschrauberähnlich ausgebildet und trägt drei Videokameras, deren Bilder jeweils übermittelt werden.

Die Sensordaten können nach Bedarf sein. Insbesondere können die Sensordaten zweidimensionale Bilddaten und/oder dreidimensionale Bilddaten und/oder Temperaturdaten und/oder akustische Daten und/oder Gasdaten umfassen. Entsprechende Sensoren sind allgemein bekannt. Die zweidimensionalen Bilddaten können beispielsweise mit einer üblichen optischen Kamera oder einer Infrarotkamera erfasst werden. Die dreidimensionalen Bilddaten können beispielsweise mittels Radar und/oder LIDAR und/oder Ultraschall erfasst werden. Für die Erfassung von Temperaturdaten können übliche Wärmemesseinrichtungen verwendet werden, für die akustischen Daten Schallsensoren. Für die Erfassung von Gasdaten sind Gassensoren bekannt, auch solche, die auf chemisch-analytischer Basis arbeiten.

Die Zeiträume, zu denen das Kernverfahren ausgeführt wird, können nach Bedarf bestimmt sein. Insbesondere kann die Ausführung des Kernverfahrens zyklisch, bei Eintreten vorbestimmter Betriebszustände der Anlage der Grundstoffindustrie und/oder auf Anforderung durch eine Bedienperson (sozusagen auf Knopfdruck) gestartet werden.

In einer bevorzugten Ausgestaltung wird an eine Steuereinrichtung der Anlage eine Meldung übermittelt, wenn der Sensorträger in die Nähe der Aggregate der Anlage der Grundstoffindustrie bewegt wird oder sich dort befindet, so dass die Steuereinrichtung der Anlage die Anlage in Reaktion auf die Meldung in definierter Weise ansteuern kann. Es kann also eine Interaktion mit der Steuereinrichtung der Anlage bestehen, so dass die Steuereinrichtung der Anlage - gegebenenfalls beschränkt auf einzelne Aggregate der Anlage - einen bestimmten Anlagenzustand herbeiführen kann. Beispielsweise kann im Falle eines Walzgerüsts eine Walzenkühlung temporär abgeschaltet werden, um einen Blick auf die Walze freizugeben, während und solange der Sensorträger sich im Bereich dieses Walzgerüsts befindet.

Die Meldung kann im einfachsten Fall von einer Bedienperson ausgehen. Es ist aber auch möglich, dass eine Steuereinrichtung des Sensorträgers eigenständig die Meldung an die Steuereinrichtung der Anlage übermittelt, so dass die Bedienperson an dieser Stelle von Überwachungs- und Kontrollaufgaben entlastet wird.

Das Herbeiführen eines bestimmten Anlagenzustands ist oftmals problemlos realisierbar, weil auch dann, wenn die Anlage als Ganzes arbeitet, einzelne Aggregate dennoch temporär gerade kein Material ver- oder bearbeiten. Beispielsweise bei einem Walzgerüst erfolgt das Walzen eines flachen Walzguts üblicherweise in voneinander getrennten Abschnitten (einzelne Brammen, einzelne Bänder). Zwischen dem Auslaufen des Bandfußes eines Bandes aus einem Walzgerüst und dem Einlaufen des Bandkopfes des nachfolgenden Bandes in dieses Walzgerüst wird in diesem Walzgerüst kein Walzgut gewalzt. Daher kann für dieses Walzgerüst beispielsweise die Walzenkühlung abgeschaltet werden, weil während dieses Zeitraums in dem betreffenden Walzgerüst gerade kein Material gewalzt wird und die Kühlung daher nicht erforderlich ist. In analoger Weise können, wenn gerade kein Walzgut gekühlt wird, beispielsweise Kühldüsen einer Kühleinrichtung einzeln oder gruppenweise eingeschaltet oder ausgeschaltet werden, um festzustellen zu können, ob die Kühldüsen ordnungsgemäß geschaltet werden können.

Es ist sogar möglich, dass eine von der Steuereinrichtung der Anlage stammende Rückmeldung entgegengenommen wird, die beim Bewegen des Sensorträgers durch die Anlage und/oder bei der Erfassung der Sensordaten berücksichtigt wird. Die Steuereinrichtung der Anlage übermittelt also die Rückmeldung, so dass diese Meldung bei der Erfassung der Sensordaten berücksichtigt werden kann. Es ist beispielsweise möglich, dass zunächst eine Steuereinrichtung des Sensorträgers eine Meldung des Inhalts "der Sensorträger befindet sich jetzt bei Walzgerüsts 3" an die Steuereinrichtung der Anlage übermittelt und danach der Sensorträger dort verharrt, beispielsweise im Falle einer hubschrauberartigen Ausgestaltung dort schwebt. Erst wenn die Steuereinrichtung der Anlage eine Rückmeldung des Inhalts "die Walzenkühlung wurde abgeschaltet" an die Steuereinrichtung des Sensorträgers übermittelt, wird der Sensorträger entlang der Ballenlänge der Walzen des Walzgerüsts bewegt, so dass nach und nach die Sensordaten entlang der Ballenlänge bewegt werden. Ähnliche Vorgehensweisen sind mit anderen Maßnahmen auch bei anderen Aggregaten der Anlage möglich.

Dieses Wechselspiel der Meldungen lässt sich fortsetzen. Die Steuereinrichtung des Sensorträgers kann beispielsweise auch eine Meldung an die Steuereinrichtung der Anlage übermitteln, dass die Erfassung der Sensordaten in einem bestimmten Bereich der Anlage (gemäß Beispiel bei Walzgerüsts 3) abgeschlossen ist. Daraufhin kann die Steuereinrichtung der Anlage den bestimmten Anlagenzustand wieder beenden, vorliegend also beispielsweise die Walzenkühlung wieder einschalten.

Im einfachsten Fall wird der Sensorträger mittels einer Fernsteuerung leitungslos von einem Menschen gesteuert. In diesem Fall kann es sich bei dem Sensorträger beispielsweise um ein "übliches" ferngesteuertes Modellflugzeug oder ein Modell eines Landfahrzeugs handeln, das mit den entsprechenden Sensoreinrichtungen versehen ist. Vorzugsweise wird der Sensorträger jedoch von einer Steuereinrichtung autonom gesteuert. In diesem Fall muss ein Mensch - wenn überhaupt - lediglich die Ausführung des Kernverfahrens anfordern bzw. auslösen. Die Ausführung selbst erfolgt in diesem Fall automatisiert ("autonom"). Die Steuereinrichtung, welche die autonome Steuerung implementiert, kann alternativ an dem Sensorträger selbst angeordnet sein oder über eine leitungslose Kommunikationsverbindung mit dem Sensorträger kommunizieren.

Bei gegebener Sensorik - beispielsweise Abstandssensoren - kann es möglich sein, dass die Steuereinrichtung während des Bewegens des Sensorträgers in der Anlage selbsttätig jeweils den nächsten Abschnitt des Weges ermittelt, entlang dessen der Sensorträger in der Anlage bewegt wird. Die Vorgehensweise ist vom Ansatz her dieselbe, die ein Mensch ergreifen würde, wenn er sich in einer ihm unbekannten Umgebung bewegt. Erheblich vorteilhafter ist es jedoch, wenn der Steuereinrichtung ein Modell der Anlage und/oder ein Weg, entlang dessen der Sensorträger bewegt werden soll, bereits vorab bekannt sind.

Es ist möglich, dass der Steuereinrichtung das Modell der Anlage und/oder der Weg fest vorgegeben sind. Vorzugsweise adaptiert die Steuereinrichtung jedoch das Modell der Anlage und/oder den Weg anhand von Sensordaten, die beim Bewegen des Sensorträgers in der Anlage erfasst werden. Dadurch findet sich der Sensorträger mit fortschreitender Benutzungsdauer sozusagen immer besser in der Anlage zurecht. Solange die Steuereinrichtung dieselbe bleibt, kann dies sogar dann noch gelten, wenn der Sensorträger ersetzt wird.

Es gibt oftmals auch eine konventionelle Anlagenüberwachung, nachfolgend als Überwachungseinrichtung bezeichnet. Eine derartige Überwachungseinrichtung überwacht während des Betriebs der Anlage der Grundstoffindustrie anfallende Steuerdaten für die Anlage der Grundstoffindustrie auf eine Abweichung von erwarteten Steuerdaten. Alternativ oder zusätzlich erfasst sie während des Betriebs der Anlage der Grundstoffindustrie anfallende Betriebsdaten der Anlage der Grundstoffindustrie und überwacht diese Betriebsdaten auf eine Abweichung von erwarteten Betriebsdaten. Im Stand der Technik gibt die Überwachungseinrichtung eine Alarmmeldung an eine Bedienperson aus, wenn sie einen ungewöhnlichen Sachverhalt erkennt, also Abweichungen der anfallenden Steuer- und/oder Betriebsdaten von den erwarteten Steuer- und/oder Betriebsdaten.

Es ist möglich, diese Vorgehensweise beizubehalten. In diesem Fall muss gegebenenfalls die Bedienperson die Ausführung des Kernverfahrens anstoßen. Es ist jedoch auch möglich, dass die Steuereinrichtung des Sensorträgers von der genannten Überwachungseinrichtung eine Ausführungsanforderung für das Kernverfahren entgegennimmt und das Kernverfahren aufgrund der Ausführungsanforderung ausführt. Die Überwachungseinrichtung kann also eine Art Triggersignal ausgeben, das eine Erfassung von Daten der Anlage durch den Sensorträger auslöst. Die Überwachungseinrichtung kann die Ausführungsanforderung somit immer dann an die Steuereinrichtung übermitteln, wenn sie einen ungewöhnlichen Sachverhalt erkennt. Die Ausführungsanforderung ist sozusagen das Alarmsignal für die Steuereinrichtung des Sensorträgers.

Im einfachsten Fall wird durch die Ausführungsanforderung bewirkt, dass die Ausführung des Kernverfahrens in vollem Umfang ausgelöst wird, dass also mittels des Sensorträgers in der Anlage im vollen vorgesehenen Umfang Sensordaten erfasst werden. Es ist jedoch möglich, dass die Ausführungsanforderung eine Information umfasst, welche der Steuerdaten und/oder welche der Betriebsdaten der Anlage von den erwarteten Steuerdaten bzw. den erwarteten Betriebsdaten abweichen und/oder welcher Bereich der Anlage von dem Sensorträger überwacht werden soll. In diesem Fall ist es möglich, dass die Steuereinrichtung einen Weg, entlang dessen der Sensorträger bewegt werden soll, in Abhängigkeit von der Information bestimmt. Es ist also möglich gezielt in einem bestimmten Bereich, in dem der ungewöhnliche Sachverhalt aufgetreten ist, abzufahren. Wenn also die Information direkt oder indirekt spezifiziert, dass bei einer Walzstraße mit insgesamt fünf Walzgerüsten ein Problem im Bereich von Walzgerüst 3 aufgetreten sein könnte, ist es nicht erforderlich, mit dem Sensorträger alle fünf Walzgerüste abzufahren. Vielmehr ist es ausreichend, wenn der Sensorträger konkret im Bereich von Walzgerüst 3 seine Sensordaten erfasst und die Bereiche der anderen Walzgerüste nicht anfährt. Es ist möglich, dass die Steuereinrichtung nach der durch die Ausführungsanforderung ausgelösten Ausführung des Kernverfahrens auf dem durch die zusätzliche Information der Ausführungsanforderung bestimmten Weg eine Mitteilung darüber entgegennimmt, welche Aggregate der Anlage die Abweichung der Steuerdaten und/oder der Betriebsdaten der Anlage von den erwarteten Steuerdaten bzw. den erwarteten Betriebsdaten hervorgerufen haben. In diesem Fall kann, soweit erforderlich, die Steuereinrichtung den von der Information abhängigen Weg in Abhängigkeit von der Mitteilung adaptieren.

Die Aufgabe wird weiterhin durch ein Steuerprogramm mit den Merkmalen des Anspruchs 13 gelöst. Erfindungsgemäß umfasst das Steuerprogramm Befehle, die bei ihrer Ausführung durch eine Steuereinrichtung für einen Sensorträger die Steuereinrichtung veranlassen, die Schritte eines derartigen Überwachungsverfahrens autonom auszuführen.

Die Aufgabe wird weiterhin durch eine Steuereinrichtung für einen Sensorträger mit den Merkmalen des Anspruchs 14 gelöst. Erfindungsgemäß ist die Steuereinrichtung mit einem erfindungsgemäßen Steuerprogramm programmiert, so dass die Steuereinrichtung den Sensorträger im Betrieb gemäß einem erfindungsgemäßen Überwachungsverfahren betreibt.

Die Aufgabe wird weiterhin durch ein Sensorsystem mit den Merkmalen des Anspruchs 15 gelöst. Vorteilhafte Ausgestaltungen des Sensorsystems sind Gegenstand der abhängigen Ansprüche 16 und 17.

Erfindungsgemäß umfasst das Sensorsystem einen nicht spurgebundenen, motorisch angetriebenen, unbemannten Sensorträger und eine Steuereinrichtung für den Sensorträger. An dem Sensorträger sind Sensoreinrichtungen zur Erfassung von Sensordaten aus der Umgebung des Sensorträgers angeordnet. Der Sensorträger weist eine Speichereinrichtung zum Speichern der erfassten Sensordaten und/oder eine Übermittlungseinrichtung zum leitungslosen Übermitteln der erfassten Sensordaten auf. Die Steuereinrichtung ist als erfindungsgemäße Steuereinrichtung ausgebildet. Die sich ergebenden Vorteile korrespondieren mit denen des Überwachungsverfahrens.

Ebenso wie bei dem Überwachungsverfahren kann der Sensorträger als sich auf dem Boden bewegender Sensorträger oder als sich in der Luft bewegender Sensorträger ausgebildet sein.

Die Sensoreinrichtungen können zur Erfassung von zweidimensionalen Bilddaten und/oder dreidimensionalen Bilddaten und/oder Temperaturdaten und/oder akustische Daten und/oder Gasdaten ausgebildet sein.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: eine Anlage der Grundstoffindustrie von der Seite,
- FIG 2: die Anlage von FIG 1 zuzüglich eines Sensorsystems von oben und
- FIG 3 bis 7: Ablaufdiagramme.
Beschreibung der Ausführungsformen

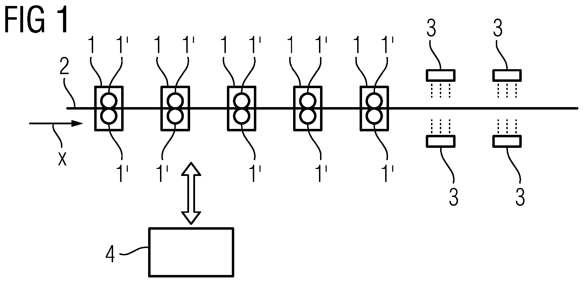

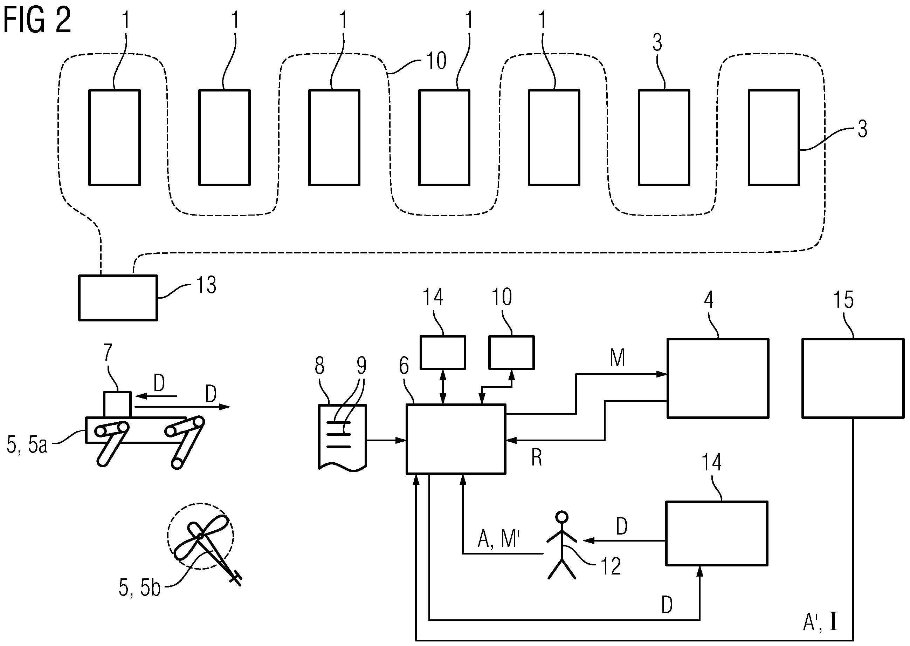

Gemäß den FIG 1 und 2 ist eine Anlage der Grundstoffindustrie beispielsweise als Anlage der Metallindustrie ausgebildet. Konkret ist rein beispielhaft eine Walzstraße dargestellt. Die Walzstraße weist mehrere Walzgerüste 1 auf, die von einem Walzgut 2 sequenziell nacheinander durchlaufen werden. Von den Walzgerüsten 1 sind in FIG 1 nur die Arbeitswalzen 1' dargestellt. Mit x ist die Transportrichtung des Walzguts 2 bezeichnet. Hinter den Walzgerüsten 1 ist eine Kühlstrecke mit mehreren einzeln ansteuerbaren Kühlbalken 3 angeordnet. Mittels der Kühlbalken 3 wird ein flüssiges, in der Regel auf Wasser basierendes Kühlmittel auf das Walzgut 2 aufgebracht. In FIG 1 sind je zwei Kühlbalken 3 oberhalb und unterhalb des Walzguts 2 angeordnet. Die Kühlbalken 3 könnten jedoch alternativ auch ausschließlich oberhalb oder ausschließlich unterhalb des Walzguts 2 angeordnet sein. Auch können nach Bedarf oberhalb und/oder unterhalb des Walzguts 2 auch mehr als zwei Kühlbalken 3 angeordnet sein. Die Anlage der Grundstoffindustrie wird von einer Steuereinrichtung 4 gesteuert. Als solche ist in FIG 1 durch einen dicken, nicht mit einem Bezugszeichen versehenen Doppelpfeil angedeutet.

In Verbindung mit der in den FIG 1 und 2 dargestellten Anlage wird die vorliegende Erfindung beispielhaft erläutert. Prinzipiell kann die Anlage aber auch als andersartige Anlage der Metallindustrie und sogar als andersartige Anlage der Grundstoffindustrie ausgebildet sein. Beispielsweise kann die Walzstraße auch mehr oder weniger als die dargestellte Anzahl an Walzgerüsten aufweisen oder kann die Walzstraße zusätzlich eine Vorstraße oder einen Haspel oder eine Beizlinie oder andere Einrichtungen aufweisen. Auch kann die Anlage beispielsweise als Gießwalzanlage oder als reine Stranggießanlage ausgebildet sein. Auch andere Ausgestaltungen sind möglich.

Die Anlage soll im laufenden Betrieb mittels eines Sensorssystems überwacht werden. Das Sensorsystem umfasst gemäß FIG 2 einen Sensorträger 5 und eine Steuereinrichtung 6 für den Sensorträger 5.

Der Sensorträger 5 weist fünf Kerneigenschaften auf, die nachstehend einzeln behandelt werden.

Zunächst ist der Sensorträger 5 nicht spurgebunden. Er bewegt sich also nicht auf Schienen oder dergleichen. Beispielsweise kann der Sensorträger 5 sich auf dem Boden bewegen, beispielsweise als hundeartiger Sensorträger 5a ausgebildet sein. Alternativ kann der Sensorträger 5 sich in der Luft bewegen, also als fliegender Sensorträger 5b ausgebildet sein. Beispielsweise kann der fliegende Sensorträger 5b als Helikopter oder dergleichen ausgebildet sein.

Weiterhin ist der Sensorträger 5 motorisch angetrieben. Er weist also einen internen Energiespeicher (in der Regel einen Akkumulator) und über den Energiespeicher angetriebene Motoren (in der Regel Elektromotoren) auf. Der Energiespeicher und die Motoren sind nicht separat als solche gekennzeichnet.

Weiterhin ist der Sensorträger 5 als unbemannter Sensorträger ausgebildet. Diese Eigenschaft ist ganz entscheidend dafür, dass der Sensorträger 5 ihm zugewiesenen Aufgaben während des laufenden Betriebs der Anlage wahrnehmen kann.

Weiterhin sind an dem Sensorträger 5 Sensoreinrichtungen 7 zur Erfassung von Sensordaten D aus der Umgebung des Sensorträgers 5 angeordnet. Anderenfalls könnte der Sensorträger 5 die erforderliche Datenerfassung nicht durchführen. Die Sensoreinrichtungen 7 sind nur bei dem hundeartigen Sensorträger 5a eingezeichnet. Sie sind aber auch bei dem fliegenden Sensorträger 5b vorhanden

Die Sensoreinrichtungen 7 können nach Bedarf ausgebildet sein. Beispielsweise können die Sensoreinrichtungen 7 zur Erfassung von zweidimensionalen Bilddaten (beispielsweise einzelnen Bildern [Fotos] und/oder Videosequenzen, sowohl im sichtbaren Bereich als auch im Infrarotbereich) ausgebildet sein. Entsprechende Kameras sind allgemein bekannt. Alternativ oder zusätzlich können die Sensoreinrichtungen 7 zur Erfassung von dreidimensionalen Bilddaten ausgebildet sein, beispielsweise als Radar-, LIDAR- und eventuell auch als Ultraschallsensoren. Alternativ oder zusätzlich können die Sensoreinrichtungen 7 zur Erfassung von Temperaturdaten ausgebildet sein. Alternativ oder zusätzlich kann mittels der Sensoreinrichtungen 7 eine Erfassung von Gasdaten erfolgen, eventuell sogar eine Analyse.

Schließlich sind an dem Sensorträger 5 eine Speichereinrichtung zum Speichern der erfassten Sensordaten D und/oder eine Übermittlungseinrichtung zum Übermitteln der erfassten Sensordaten D angeordnet. Die Übermittlungseinrichtung dient dem leitungslosen Übermitteln der erfassten Sensordaten D. Die Übermittlungseinrichtung kann also beispielsweise einen Sender zum Aussenden der Sensordaten D als Funksignale ausgebildet sein.

Die Steuereinrichtung 6 kann Bestandteil des Sensorträgers 5 sein, also in dem Sensorträger 5 oder an dem Sensorträger 5 angeordnet sein. Alternativ kann die Steuereinrichtung 6 extern angeordnet sein. Im letztgenannten Fall kommuniziert die Steuereinrichtung 6 mit dem Sensorträger 5 leitungslos.

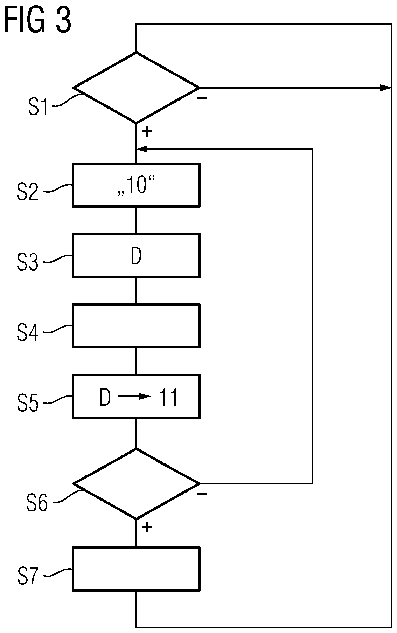

Unabhängig davon, ob die Steuereinrichtung 6 Bestandteil des Sensorträgers 5 ist oder nicht, ist die Steuereinrichtung 6 mit einem Steuerprogramm 8 programmiert. Das Steuerprogramm 8 umfasst Befehle 9. Die Programmierung der Steuereinrichtung 6 mit dem Steuerprogramm 8 bzw. - im wesentlichen gleichbedeutend - die Ausführung der Befehle 9 durch die Steuereinrichtung 6 veranlassen die Steuereinrichtung 6, die Schritte eines Überwachungsverfahrens auszuführen, das nachstehend in Verbindung mit FIG 3 und danach den weiteren FIG näher erläutert wird. Die Ausführung wird nachstehend in Verbindung mit dem fliegenden Sensorträger 5b erläutert. Sie ist aber prinzipiell auch mit dem Sensorträger 5a möglich, der sich auf dem Boden bewegt.

Gemäß FIG 3 prüft die Steuereinrichtung 6 in einem Schritt S1, ob eine Ausführungsbedingung für ein Kernverfahren des Überwachungsverfahrens erfüllt ist. Die Steuereinrichtung 6 führt die Prüfung des Schrittes S1 immer wieder durch, bis die Ausführungsbedingung erfüllt ist.

Immer dann, wenn die Ausführungsbedingung erfüllt ist, bewegt die Steuereinrichtung 6 den Sensorträger 5 einem Schritt S2 in die Nähe von Aggregaten der Anlage der Grundstoffindustrie. Beispielsweise kann der fliegende Sensorträger 5b entlang eines Weges 10 durch die Anlage bewegt werden, so dass der Sensorträger 5 nacheinander Bereiche in der Nähe der verschiedenen Aggregate - hier der Walzgerüste 1 und der Kühlbalken 3 - anfährt. Der in FIG 2 eingezeichnete Weg 10 ist rein beispielhaft und kann nicht nur von Anlage zu Anlage variieren, sondern auch von anderen Sachverhalten. Beispielsweise kann bei mehreren aufeinanderfolgenden Ausführungen des Kernverfahrens jeweils ein anderer Teil der Anlage überwacht werden, so dass nur über die Gesamtheit der Ausführungen des Kernverfahrens gesehen die gesamte Anlage überwacht wird.

Während der Sensorträger 5 sich durch die Anlage bewegt, erfasst der Sensorträger 5 in einem Schritt S3 mittels der Sensoreinrichtungen 7 die Sensordaten D. Die Sensordaten D stammen aus der momentanen Umgebung des Sensorträgers 5. Die Erfassung erfolgt, während der Sensorträger 5 sich im Bereich von Aggregaten der Anlage befindet, beispielsweise in der Nähe jeweils eines der Walzgerüste 1. Daher sind die Sensordaten D von den Aggregaten der Anlage und deren Zuständen abhängig. Rein beispielhaft kann der Sensorträger 5 jeweils die Walzenoberflächen der Arbeitswalzen der Walzgerüste 1 erfassen.

Die erfassten Sensordaten D werden in einem Schritt S4 in der Speichereinrichtung gespeichert. Die Speicherung erfolgt in der Regel zusätzlich zu früher erfassten, bereits gespeicherten Sensordaten D. Alternativ oder zusätzlich werden die erfassten Sensordaten D in einem Schritt S5 leitungslos an eine externe Einrichtung 11 übermittelt, die außerhalb des Sensorträgers 5 angeordnet ist. Die externe Einrichtung 11 kann beispielsweise eine Auswertungseinrichtung oder eine Mensch-Maschine-Schnittstelle zu einer Bedienperson 12 sein.

In einem Schritt S6 prüft die Steuereinrichtung 6, ob das Erfassen der Sensordaten D beendet ist. Solange dies nicht der Fall ist, geht die Steuereinrichtung 6 zum Schritt S2 zurück. Anderenfalls steuert die Steuereinrichtung 6 den Sensorträger 5 in einem Schritt S7 derart an, dass er wieder von den Aggregaten der Anlage der Grundstoffindustrie entfernt wird. Beispielsweise kann der Sensorträger 5 zu einem Ruheplatz 13 gesteuert werden, von dem aus er auch seinen Weg 10 durch die Anlage 5 begonnen hat. Der Ausführung des Schrittes S7 geht die Steuereinrichtung zum Schritt S1 zurück.

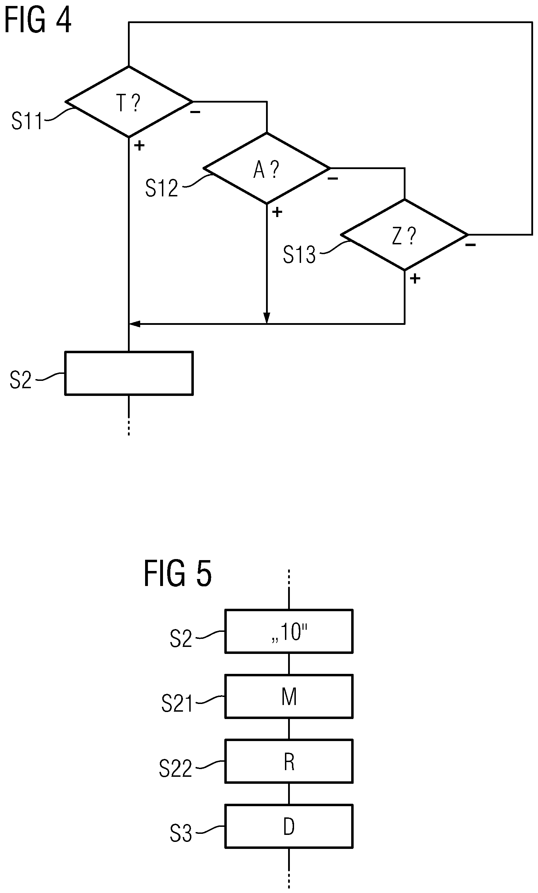

Die Ausführungsbedingung kann nach Bedarf ausgestaltet sein. Insbesondere kann die Ausführungsbedingung derart ausgestaltet sein, dass die Ausführung des Kernverfahrens zyklisch, bei Eintreten vorbestimmter Betriebszustände der Anlage der Grundstoffindustrie und/oder auf Anforderung durch eine Bedienperson gestartet wird. Dies wird nachstehend in Verbindung mit FIG 4 erläutert. FIG 4 zeigt eine mögliche Ausgestaltung des Schrittes S1 von FIG 3.

Gemäß FIG 4 prüft die Steuereinrichtung 6 in einem Schritt S11, ob eine Zykluszeit T abgelaufen ist. Wenn dies der Fall ist, geht die Steuereinrichtung 6 zum Schritt S2 über. Anderenfalls prüft die Steuereinrichtung 6 in einem Schritt S12, ob ihr von der Bedienperson 12 (direkt oder indirekt) eine Anforderung A zur Ausführung des Kernverfahrens vorgegeben wurde. Wenn dies der Fall ist, geht die Steuereinrichtung 6 wieder zum Schritt S2 über. Anderenfalls prüft die Steuereinrichtung 6 in einem Schritt S13, ob ein bestimmter Betriebszustand Z der Anlage eingetreten ist, aufgrund dessen die Ausführung des Kernverfahrens erfolgen soll. Wenn dies der Fall ist, geht die Steuereinrichtung 6 wieder zum Schritt S2 über. Anderenfalls geht die Steuereinrichtung 6 zum Schritt S11 zurück.

Je nach Art des Sensorträgers 5 (ein fliegender Sensorträger 5b ist in der Regel recht schnell, ein auf dem Boden fahrender Sensorträger 5a oftmals recht langsam) kann es sinnvoll sein, wenn die Steuereinrichtung 4 der Anlage und die Steuereinrichtung 6 des Sensorträgers 5 sich miteinander abstimmen. Beispielsweise kann die Steuereinrichtung 6 zu bestimmten Zeitpunkten - konkret dann, wenn der Sensorträger 5 auf seinem Weg 10 durch die Anlage eine vorbestimmte Stelle erreicht hat oder sich ihr nähert - eine Meldung M an die Steuereinrichtung 4 der Anlage übermitteln. Dadurch wird es der Steuereinrichtung 4 der Anlage ermöglicht, in geeigneter Weise auf die Anwesenheit des Sensorträgers 5 in einem bestimmten Bereich der Anlage zu reagieren, also die Anlage in Reaktion auf die Meldung M in definierter Weise anzusteuern. Hierzu ein Beispiel, wobei ausdrücklich betont wird, dass es sich nur um ein Beispiel zur Veranschaulichung des Prinzips handelt:
Zu einem Zeitpunkt, zu dem der Sensorträger 5 sich kurz vor dem Bereich zwischen dem vordersten und dem darauffolgenden Walzgerüst 1 befindet oder sich sogar in diesem Bereich befindet, kann die Steuereinrichtung 6 in einem Schritt S21 (siehe FIG 5) eine entsprechende Meldung M an die Steuereinrichtung 4 der Anlage übermitteln. In Reaktion darauf kann die Steuereinrichtung 4 Kühleinrichtungen im Bereich zwischen diesen beiden Walzgerüsten 1 temporär abschalten bzw. deaktivieren. Wenn der Sensorträger 5 diesen Bereich wieder verlässt, kann die Steuereinrichtung 6 bei einer anderen Ausführung des Schrittes S21 eine andere Meldung M an die Steuereinrichtung 4 der Anlage übermitteln. In Reaktion darauf kann die Steuereinrichtung 4 die zuvor abgeschalteten Kühleinrichtungen wieder anschalten bzw. aktivieren.

Es ist sogar möglich und ebenfalls in FIG 5 dargestellt, dass die Steuereinrichtung 6 des Sensorträgers 5 in einem Schritt S22 eine Rückmeldung R entgegennimmt und die Rückmeldung R beim Bewegen des Sensorträgers 5 durch die Anlage und/oder bei der Erfassung der Sensordaten D berücksichtigt. Die Rückmeldung R stammt in diesem Fall von der Steuereinrichtung 4 der Anlage.

Auch hierzu wieder ein Beispiel, wobei wieder ausdrücklich betont wird, dass es sich nur um ein Beispiel zur Veranschaulichung des Prinzips handelt:
Die Rückmeldung R kann bedeuten, dass die Steuereinrichtung 4 der Anlage Kühleinrichtungen von oder zwischen zwei bestimmten aufeinanderfolgenden Walzgerüsten 1 abgeschaltet hat. Erst aufgrund dieser Rückmeldung R wird der Sensorträger 5 von der Steuereinrichtung 6 in den Bereich zwischen diesen beiden Walzgerüsten 1 geführt oder beginnt der Sensorträger 5 mit der Erfassung der Sensordaten D.

Prinzipiell sind die bisherigen Ausgestaltungen auch dann realisierbar, wenn die Steuereinrichtung 6 eine von einem Menschen bediente Fernbedienung ist. Bevorzugt ist jedoch, dass der Sensorträger 5 von der Steuereinrichtung 6 autonom gesteuert wird. Dies gilt auch im Rahmen der bisher getroffenen Ausführungen.

Im Falle der autonomen Steuerung des Sensorträgers 5 durch die Steuereinrichtung 6 ist der Steuereinrichtung 6 entsprechend der Darstellung in FIG 2 vorzugsweise ein Modell 14 der Anlage bekannt. Das Modell 14 stellt sozusagen eine "Landkarte" der Anlage (einschließlich "Höhenlinien") dar. Alternativ oder zusätzlich kann der Steuereinrichtung 6 der Weg 10, entlang dessen der Sensorträger 5 bewegt werden soll, bekannt sein.

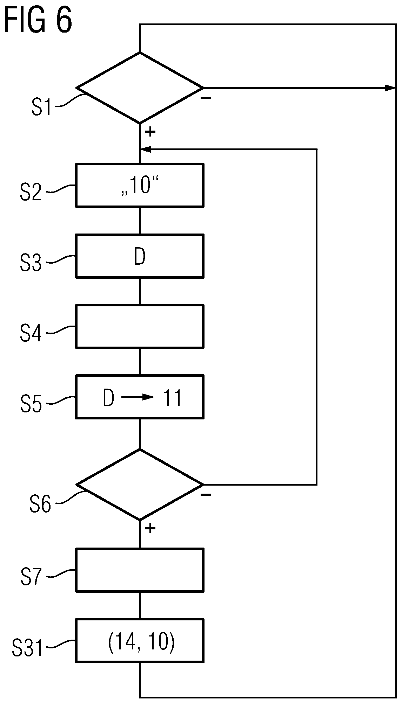

Sofern der Steuereinrichtung 6 das Modell 14 und/oder der Weg 10 bekannt sind, kann die Vorgehensweise von FIG 2 bzw. FIG 5 weiterhin so ergänzt werden, wie dies nachstehend in Verbindung mit FIG 6 erläutert wird.

Gemäß FIG 6 ist zusätzlich zu den Schritten S1 bis S7 (gegebenenfalls einschließlich der Schritte S21 und/oder S22) ein Schritt S31 vorhanden. Im Schritt S31 adaptiert die Steuereinrichtung 6 das Modell 14 und/oder den Weg 10 anhand von Sensordaten D, die beim Bewegen des Sensorträgers 5 in der Anlage erfasst werden (vorliegend genauer: erfasst wurden, Vergangenheit). Beispielsweise kann die Steuereinrichtung 6 Videodaten auswerten und dadurch Abmessungen, mit denen in dem Modell 14 die Aggregate der Anlage und deren Bestandteile modelliert werden, korrigieren und nachführen.

Bei Anlagen der Grundstoffindustrie ist oftmals eine Überwachungseinrichtung 15 (siehe FIG 2) vorhanden. Die Überwachungseinrichtung 15 überwacht während des Betriebs der Anlage der Grundstoffindustrie anfallende Steuerdaten für die Anlage der Grundstoffindustrie auf eine Abweichung von erwarteten Steuerdaten und/oder erfasst während des Betriebs der Anlage der Grundstoffindustrie anfallende Betriebsdaten der Anlage der Grundstoffindustrie und überwacht die Betriebsdaten auf eine Abweichung von erwarteten Betriebsdaten. Beispielsweise können die Sollwerte (Steuerdaten) oder die Istwerte (Betriebsdaten) von elektrischen Antrieben der Anlage überwacht werden. Auch können andere Größen überwacht werden, beispielsweise in der Anlage auftretende Geräusche oder in der Anlage anfallende Temperaturen, beispielsweise eine Temperatur eines Lagers, in dem eine Welle gelagert ist. Diese Vorgehensweise ist, wie bereits erwähnt, insoweit im Stand der Technik üblich.

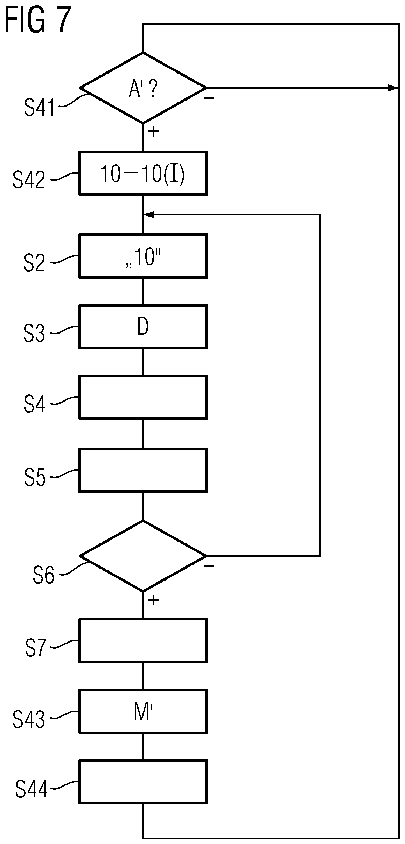

In Ausgestaltung dieser als solcher aus dem Stand der Technik bekannten Vorgehensweise ist es jedoch möglich, dass die Überwachungseinrichtung 15 eine Ausführungsanforderung A' für das Kernverfahren an die Steuereinrichtung 6 übermittelt. Die Steuereinrichtung 6 kann gemäß FIG 7 in einem Schritt S41 prüfen, ob ihr eine derartige Ausführungsanforderung A' vorgegeben wurde. Wenn dies der Fall ist, wird die Ausführung des Kernverfahrens gestartet. Der Schritt S41 kann ein Bestandteil des Schrittes S1 von FIG 2 sein.

Gegebenenfalls kann die Ausführungsanforderung A' entsprechend der Darstellung in FIG 7 eine Information I umfassen. Die Informationen I kann dafür charakteristisch sein, welche der Steuerdaten und/oder welche der Betriebsdaten der Anlage von den erwarteten Steuerdaten bzw. den erwarteten Betriebsdaten abweichen und/oder welcher Bereich der Anlage von dem Sensorträger 5 überwacht werden soll. In diesem Fall kann die Steuereinrichtung 6 in einem Schritt S42 den Weg 10, entlang dessen der Sensorträger 5 bewegt werden soll, in Abhängigkeit von der Information I bestimmen.

Auch hierzu wieder ein Beispiel, wobei wieder ausdrücklich betont wird, dass es sich nur um ein Beispiel zur Veranschaulichung des Prinzips handelt:
Die Informationen I kann bedeuten, dass bei dem mittleren der in FIG 2 dargestellten Walzgerüste 1 "etwas nicht in Ordnung ist". Dann kann die Steuereinrichtung 6 den Weg 10 derart bestimmen, dass der Sensorträger 5 einmal in den Bereich zwischen dem mittleren Walzgerüst 1 und dem Walzgerüst 1 vor dem mittleren Walzgerüst 1 und einmal in den Bereich zwischen dem mittleren Walzgerüst 1 und dem Walzgerüst 1 hinter dem Walzgerüst 1 geführt wird und jeweils die Sensordaten D erfasst werden. Für die anderen Walzgerüste 1 müssen in diesem Fall keine Sensordaten D erfasst werden.

Weiterhin können in diesem Fall, wenn also die Steuereinrichtung 6 den Weg 10 in Abhängigkeit von der Information I bestimmt, zusätzlich Schritte S43 und S44 vorhanden sein. Die Schritte S43 und S44 werden in diesem Fall erst nach der Erfassung der Sensordaten D ausgeführt, oftmals erst nach der vollständigen Ausführung des Kernverfahrens.

Im Schritt S43 nimmt die Steuereinrichtung 6 eine Mitteilung M' entgegen. Die Mitteilung M' kann der Steuereinrichtung 6 beispielsweise von der Bedienperson 12 vorgegeben werden. Sie spezifiziert, welche Aggregate der Anlage die Abweichung der Steuerdaten und/oder der Betriebsdaten der Anlage von den erwarteten Steuerdaten bzw. den erwarteten Betriebsdaten (ergänze: tatsächlich) hervorgerufen haben. Beispielsweise kann durch die Mitteilung M' der Fehlerort genauer spezifiziert werden oder kann auch spezifiziert werden, dass der Fehlerort an völlig anderer Stelle als zuvor vermutet gelegen hat. Im Schritt S44 kann die Steuereinrichtung 6 den von der Information I abhängigen Weg 10 in Abhängigkeit von der Mitteilung M' adaptieren.

Die vorliegende Erfindung weist viele Vorteile auf. Die Erfassung der Sensordaten D ist auch dann möglich, wenn die Anlage weiter betrieben wird oder deren Betrieb nur kurzzeitig unterbrochen ist. Die Sicherheit für die Bedienperson 12 bleibt dennoch erhalten. Der Sensorträger 5 kann - im Gegensatz zu einem Menschen - die ihm zugewiesenen Aufgaben ermüdungsfrei und in reproduzierbare Art und Weise ausführen. "Echte" Wartungsintervalle, die nach wie vor durch Bedienpersonen 12 vorgenommen werden, können deutlich seltener und möglicherweise sogar nur bei konkretem Bedarf eingelegt werden. Die resultierende Produktivität der Anlage kann dadurch deutlich erhöht werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Walzgerüste
- 1': Arbeitswalzen
- 2: Walzgut
- 3: Kühlbalken
- 4, 6: Steuereinrichtungen
- 5, 5a, 5b: Sensorträger
- 7: Sensoreinrichtungen
- 8: Steuerprogramm
- 9: Befehle
- 10: Weg
- 11: Einrichtung
- 12: Bedienperson
- 13: Ruheplatz
- 14: Modell
- 15: Überwachungseinrichtung

- A: Anforderung
- A': Ausführungsanforderung
- D: Sensordaten
- I: Information
- M: Meldung
- M': Mitteilung
- R: Rückmeldung
- S1 bis S44: Schritte
- T: Zykluszeit
- x: Transportrichtung
- Z: Betriebszustand

## Patentansprüche

1. Überwachungsverfahren für eine Anlage der Grundstoffindustrie, insbesondere der Metallindustrie, wobei im Rahmen eines Kernverfahrens im laufenden Betrieb der Anlage
- ein nicht spurgebundener, motorisch angetriebener, unbemannter Sensorträger (5) in die Nähe von Aggregaten (1, 3) der Anlage der Grundstoffindustrie bewegt wird,
- mittels an dem Sensorträger (5) angeordneter Sensoreinrichtungen (7) Sensordaten (D) aus der momentanen Umgebung des Sensorträgers (5) erfasst werden, während der Sensorträger (5) sich im Bereich der Anlage befindet,
- die erfassten Sensordaten (D) in einer an dem Sensorträger (5) angeordneten Speichereinrichtung gespeichert werden und/oder leitungslos an eine außerhalb des Sensorträgers (5) angeordnete externe Einrichtung (11) übermittelt werden und
- der Sensorträger (5) nach dem Erfassen der Sensordaten (D) wieder von den Aggregaten (1, 3) der Anlage der Grundstoffindustrie entfernt wird.

2. Überwachungsverfahren nach Anspruch 1,
**dadurch gekennzeichnet,**
**dass** der Sensorträger (5) sich auf dem Boden oder in der Luft bewegt.

3. Überwachungsverfahren nach Anspruch 1 oder 2,
**dadurch gekennzeichnet,**
**dass** die Sensordaten (D) zweidimensionale Bilddaten und/oder dreidimensionale Bilddaten und/oder Temperaturdaten und/oder akustische Daten und/oder Gasdaten umfassen.

4. Überwachungsverfahren nach Anspruch 1, 2 oder 3,
**dadurch gekennzeichnet,**
**dass** die Ausführung des Kernverfahrens zyklisch, bei Eintreten vorbestimmter Betriebszustände (Z) der Anlage der Grundstoffindustrie und/oder auf Anforderung durch eine Bedienperson (12) gestartet wird.

5. Überwachungsverfahren nach einem der obigen Ansprüche,
**dadurch gekennzeichnet,**
**dass** an eine Steuereinrichtung (4) der Anlage eine Meldung (M) übermittelt wird, wenn der Sensorträger (5) in die Nähe der Aggregate (1, 3) der Anlage der Grundstoffindustrie bewegt wird oder sich dort befindet, so dass die Steuereinrichtung (4) der Anlage die Anlage in Reaktion auf die Meldung (M) in definierter Weise ansteuern kann.

6. Überwachungsverfahren nach Anspruch 5,
**dadurch gekennzeichnet,**
**dass** eine von der Steuereinrichtung (4) der Anlage stammende Rückmeldung (R) entgegengenommen wird, die beim Bewegen des Sensorträgers (5) durch die Anlage und/oder bei der Erfassung der Sensordaten (D) berücksichtigt wird.

7. Überwachungsverfahren nach einem der obigen Ansprüche,
**dadurch gekennzeichnet,**
**dass** der Sensorträger (5) von einer Steuereinrichtung (6) autonom gesteuert wird.

8. Überwachungsverfahren nach Anspruch 7,
**dadurch gekennzeichnet,**
**dass** der Steuereinrichtung (6) ein Modell (14) der Anlage und/oder ein Weg (10), entlang dessen der Sensorträger (5) bewegt werden soll, bekannt sind.

9. Überwachungsverfahren nach Anspruch 8,
**dadurch gekennzeichnet,**
**dass** die Steuereinrichtung (6) das Modell (14) der Anlage und/oder den Weg (10) anhand von Sensordaten (D), die beim Bewegen des Sensorträgers (5) in der Anlage erfasst werden, adaptiert.

10. Überwachungsverfahren nach Anspruch 8 oder 9,
**dadurch gekennzeichnet,**
**dass** die Steuereinrichtung (6) von einer Überwachungseinrichtung (15), die während des Betriebs der Anlage der Grundstoffindustrie anfallende Steuerdaten für die Anlage der Grundstoffindustrie auf eine Abweichung von erwarteten Steuerdaten überwacht und/oder während des Betriebs der Anlage der Grundstoffindustrie anfallende Betriebsdaten der Anlage der Grundstoffindustrie erfasst und auf eine Abweichung von erwarteten Betriebsdaten überwacht, eine Ausführungsanforderung (A') für das Kernverfahren entgegennimmt und das Kernverfahren aufgrund der Ausführungsanforderung (A') ausführt.

11. Überwachungsverfahren nach Anspruch 10,
**dadurch gekennzeichnet,**
**dass** die Ausführungsanforderung (A') eine Information (I) umfasst, welche der Steuerdaten und/oder welche der Betriebsdaten der Anlage von den erwarteten Steuerdaten bzw. den erwarteten Betriebsdaten abweichen und/oder welcher Bereich der Anlage von dem Sensorträger (5) überwacht werden soll, und dass die Steuereinrichtung (6) einen Weg (10), entlang dessen der Sensorträger (5) bewegt werden soll, in Abhängigkeit von der Information (I) bestimmt.

12. Überwachungsverfahren nach Anspruch 11,
**dadurch gekennzeichnet,**
**dass** die Steuereinrichtung (6) nach der durch die Ausführungsanforderung (A') ausgelösten Ausführung des Kernverfahrens eine Mitteilung (M') darüber entgegennimmt, welche Aggregate (1, 3) der Anlage die Abweichung der Steuerdaten und/oder der Betriebsdaten der Anlage von den erwarteten Steuerdaten bzw. den erwarteten Betriebsdaten hervorgerufen haben, und dass die Steuereinrichtung (6) den von der Information (I) abhängigen Weg (10) in Abhängigkeit von der Mitteilung (M') adaptiert.

13. Steuerprogramm, wobei das Steuerprogramm Befehle (9) umfasst, die bei ihrer Ausführung durch eine Steuereinrichtung (6) für einen Sensorträger (5) die Steuereinrichtung (6) veranlassen, die Schritte eines Überwachungsverfahrens nach einem der Ansprüche 7 bis 12 auszuführen.

14. Steuereinrichtung für einen Sensorträger (5), wobei die Steuereinrichtung mit einem Steuerprogramm (8) nach Anspruch 13 programmiert ist, so dass die Steuereinrichtung den Sensorträger (5) im Betrieb gemäß einem Überwachungsverfahren nach einem der Ansprüche 7 bis 12 betreibt.

15. Sensorsystem,
- wobei das Sensorsystem einen nicht spurgebundenen, motorisch angetriebenen, unbemannten Sensorträger (5) und eine Steuereinrichtung (6) für den Sensorträger (5) umfasst,
- wobei an dem Sensorträger (5) Sensoreinrichtungen (7) zur Erfassung von Sensordaten (D) aus der Umgebung des Sensorträgers (5) angeordnet sind,
- wobei der Sensorträger (5) eine Speichereinrichtung zum Speichern der erfassten Sensordaten (D) und/oder eine Übermittlungseinrichtung zum leitungslosen Übermitteln der erfassten Sensordaten (D) aufweist,
- wobei die Steuereinrichtung (6) als Steuereinrichtung nach Anspruch 13 ausgebildet ist.

16. Sensorträger nach Anspruch 15,
**dadurch gekennzeichnet,**
**dass** der Sensorträger (5) als sich auf dem Boden bewegender Sensorträger (5a) oder als sich in der Luft bewegender Sensorträger (5b) ausgebildet ist.

17. Sensorträger nach Anspruch 15 oder 16,
**dadurch gekennzeichnet,**
**dass** die Sensoreinrichtungen (7) zur Erfassung von zweidimensionalen Bilddaten und/oder dreidimensionalen Bilddaten und/oder Temperaturdaten und/oder akustische Daten und/oder Gasdaten ausgebildet sind.
